# EUROPEAN PATENT SPECIFICATION

(11) **EP 1 598 564 B1**
(45) Date of publication and mention of the grant of the patent: **25.03.2009**
(21) Application number: 05009600.7
(22) Date of filing: 02.05.2005
(51) Int. Cl.: F16B 9/02

(54) **Suspension clamping holder for a support structure**
Klemmhalter für eine Tragstruktur
Clip de suspension pour une structure de support

(30) Priority: 30.04.2004 DE 102004021513; 09.08.2004 US 600064 P; 29.04.2005 EP 05009493; 29.04.2005 US 118694
(43) Date of publication of application: 23.11.2005
(73) Proprietor: Airbus Deutschland GmbH, 21129 Hamburg (DE)
(72) Inventor: Plate, Hans-Georg, 21514 Roseburg (DE); Zyrull, Doris, 21629 Neu Wulmstorf (DE); Schapke, Lutz, 22559 Hamburg (DE)
(74) Representative: Maiwald Patentanwalts GmbH

(56) References cited:
- GB-A- 2 276 912
- US-A1- 2003 070 377

## Description

The present invention relates to a suspension clamping holder for a support structure, to a closure element and to a fastening system. The suspension clamping holder of the present invention is used in particular with aircraft fuselage cross beams, seat rail supports, or sustain rail supports, in order to provide a suitable holder for, for example, cable bundles.

A plurality of different clamping holders is known. For weight reduction in the aviation industry, these can be made from plastic. Such holders, however, have the disadvantage that they slip with time, since the plastic shows some kind of flow effects after longer use.

In the aviation industry, holders are mostly used, which are attached on a corresponding support structure via specially applied bores in these structures. Based on statistical reasons, the separately applied bores must be thickened in a plane-like manner, which in turn leads to an undesired weight increase. A further disadvantage is that the manufacturing expense is very high from the subsequently applied bores and, if necessary, required cleaning.

The document DE 197 43 976 A1 describes, for example, a holding device, which is to be mounted on a wall. The holding device has a profile piece, which has on its side turned toward the wall at least one horizontally projecting flange-like leg, which serves for suspension in a wall recess or in an associated intermediate piece. However, it is problematic to ensure rotational or twist security, whereby the wall must be provided with additional bores, or additional contact surfaces are necessary. Likewise, a corresponding screw connection can be used, which, however, in turn brings the previously noted disadvantages, since, in practice, an additional bore is required for the screw.

Document GB 2 276 912 A1 describes a rail clip for a sign mounts on a shelf edge rail by virtue of opposed flanges engaging opposed side edge parts of the rail. One flange is slidably mounted on the clip for adjustment ans has a lug with a detent which engages a rack, thus the flange may be pushed up to engage the lower edge of the rail and held in such position by engagement of the detent on lug with the rack.

The present invention is based on an object of providing a suspension clamping holder, which can be mounted in a stable manner and protected against torsion on a support structure, without requiring a modification of the support structure. The suspension clamping holder should be simple to handle and should have a minimal weight.

This object is solved by a suspension clamping holder according to claim 1 for a support structure with T-shaped crossbeam profiles, which has a first region, which is provided with at least one holding member, and at least one bar region, wherein the first region and the bar region form an angle, and wherein the suspension clamping holder comprises a holder, on an end of which a holding element is formed, which can be suspended for holding the suspension clamping holder in the holding member, and a clamping slider, which is connected releasably with the bar region of the support structure and can be clamped fixedly onto the bar region of the support structure for locking the suspension clamping holder suspended in the holding member. Further, the holder has a support, on which the clamping slider is arranged. For additional support of the suspended suspension clamping holder, the support is adapted at least partially to the shape of the support structure, that is to its shape in the first region and in the bar region. Therefore, the support rests, in the suspended state of the suspension clamping holder, at least partially between the holding member and the bar region on the first region of the support structure. If necessary, an additional support takes place by contact of the support on the bar region of the support structure. Advantageously, the suspension clamping holder can be adapted by means of different designs of the support in a simple manner to different support structure shapes.

Preferably, the suspension clamping holder is employed with T-shaped crossbeam profiles, like those that are used in aircraft pressure fuselages or for seat rail supports or support rail bearings. These support structures typically are made from aluminum or fiber-reinforced composite material and are provided, for weight savings, with facilitation bores, in which the preferably hook-shaped holding element of the suspension clamping holder is suspended. No additional bores for secure attachment of the suspension clamping holder are necessary in addition to the facilitation bores already arranged in the support structure. Of course, the holding member provided in the support structure for suspending the hook-shaped holding element can be formed not only as bores, but also, for example, as projection with a corresponding groove, or they can be formed in another known manner.

In particular, it is advantageous that in the suspended state of the suspension clamping holder, by means of the cooperation of the contact surface of the hooked-in holding element and of the clamping slider clamped onto the bar region of the support structure, a secure attachment is enabled. By means of the additional locking via the clamping slider, a tilting, twisting, or sliding of the suspension clamping holder hanging on the holding member under the force of gravity is effectively prevented.

Beyond this, it is appropriate that the holder has a support, on which the clamping slider is arranged. For additional support of the suspended suspension clamping holder, the support is advantageously adapted at least partially to the shape of the support structure, that is to its shape in the first region and/or in the bar region. Therefore, the support rests, in the suspended state of the suspension clamping holder, at least partially between the holding member and the bar region on the first region of the support structure. If necessary, an additional support takes place by contact of the support on the bar region of the support structure. Advantageously, the suspension clamping holder can be adapted by means of different designs of the support in a simple manner to different support structure shapes.

According to a first embodiment, the clamping slider has two movable flanges, which surround the edge of the bar region in a clamping manner. The clamping slider is thereby lockingly guided into the support. In addition, it is advantageous that the clamping slider is exchangeable, so that by use, for example, of a thicker or larger clamping slider, respectively, an adaptation to the height of the holding member as well as to the thickness of the bar region is possible.

According to an alternative embodiment, the flanges of the clamping slider are formed in such a manner that they enclose the edge of the bar region in a U-shape, wherein the clamping slider is attached by suspension on the bar region. Also this clamping slider is lockingly guided into the support and is exchangeable, whereby the already mentioned advantages are achieved. For weight savings, the clamping slider, however, also can be formed as one-piece with the support.

The holder can be provided with depressions for receiving cable bundles, for example. These depressions are formed in the holder to be typically arched.

In order to permit a particularly secure holding of the suspension clamping holder, it is advantageous to use a closure element, which is slided on the suspended holding element and is subsequently locked by suitable member.

Next, the invention will be described in greater detail with reference to different embodiments shown in the figures. In the drawings:
- **Fig. 1a**: shows a three-dimensional representation of a first embodiment of the suspension clamping holder according to the present invention, which is suspended in a crossbeam with a doubled T-profile;
- **Fig. 1b**: shows a sectional view of the assembly shown in Fig. 1a;
- **Fig. 2a**: shows a three-dimensional representation of a second embodiment of the suspension clamping holder according to the present invention, which is suspended in a crossbeam with a double T-profile;
- **Fig. 2b**: shows a sectional view of the assembly shown in Fig. 2a;
- **Fig. 3**: shows a third embodiment of the suspension clamping holder according to the present invention in three-dimensional representation;
- **Fig. 4**: shows a three-dimensional representation of a closing element for the suspension clamping holder according to Fig. 3; and
- **Fig. 5**: shows a sectional view of the suspended suspension clamping holder according to Fig. 3, which is locked with a closure element according to Fig. 4.

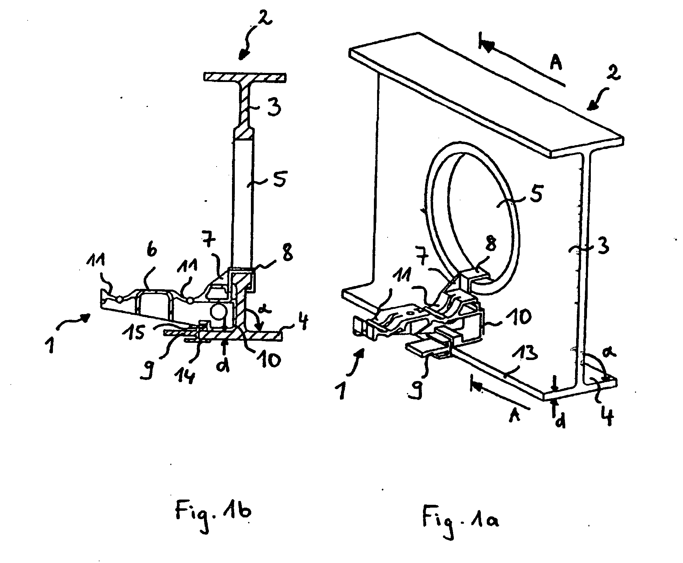

Fig. 1a shows in three-dimensional representation a suspension clamping holder 1, which is suspended in a crossbeam 2 with a double T-profile. Fig. 1b shows a sectional view of Fig. 1a along the line A-A. The crossbeam 2 has a first region 3, which is provided on both sides with T-profiles arranged at a right angle (α ≈ 90°) thereto, which are designated subsequently as bar regions 4. Such a crossbeam is typically used in aircraft construction for fuselage structures, seat rail supports, or support rail bearings. For weight savings, the crossbeam 2 is provided with so-called facilitation bores 5, which are arranged in the first region 3 of the crossbeam 2.

The suspension clamping holder 1 has a holder 6, on an end 7 of which, a hook-shaped holding element 8 is formed. Via the holding element 8, the suspension clamping holder 1 is suspended in the bore 5 of the crossbeam 2. In this manner, the suspension clamping holder 1 is supported via the contact surface of the holding element 8 suspended in the bore 5. For additional support of the suspended suspension clamping holder 1, a support 10 is provided on the holder 6. The support 10 is adapted to the shape of the crossbeam 2 in such a manner that, in the suspended state, the support 10 rests on the first region 3 of the crossbeam 2, as well as on the angled bar region 4 of the crossbeam 2.

In order to prevent a release of the suspended suspension clamping holder 1 by slipping, twisting, or tilting, the suspension clamping holder 1 has a clamping slider 9, which is lockably guided in the support 10 and releasably connected with the bar region 4. For locking of the suspension clamping holder 1 suspended in the bore 5, the clamping slider 9 is fixedly clamped onto the bar region 4. In this connection, the flanges 14, 15 of the clamping slider 9 clampingly surround the bar region 4 (see Fig. 1a). By means of the pressure load of the section of the flanges 14, 15 projecting over the bar region 4, the clamping slider 9 can again be released when necessary. The clamping effect of the clamping slider 9, therefore, is designed such that a secure locking is possible even with different bar thicknesses d.

For receiving of cable bundles, the holder 6 is further provided with depressions or dents 11, which are formed in the embodiment of Fig. 1a and 1b in the shape of an arc.

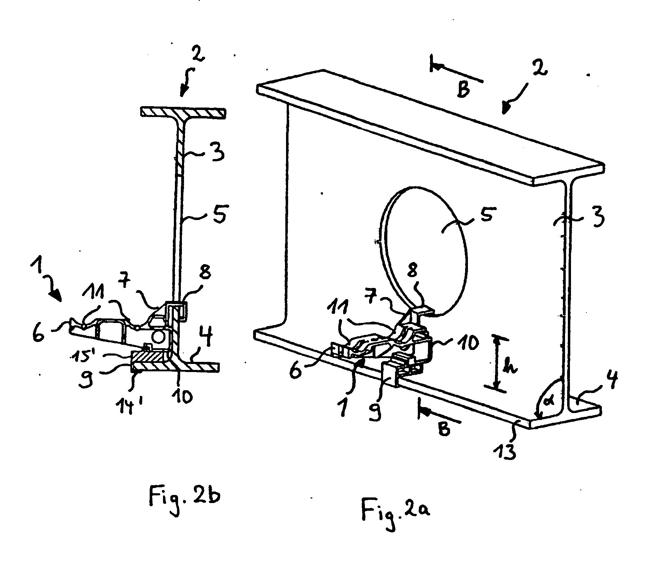

Fig. 2a shows in a three-dimension view an embodiment of the suspension clamping device 1 of the present invention with a modified clamping slider 9. In Fig. 2b, a sectional view of Fig. 2a along line B-B is shown. The components already described in connection with Fig. 1a and 1b are designated subsequently with identical reference numerals. The suspension clamping holder 1 is again suspended via its hook-shaped holding element 8 in the facilitation bore 5 of the crossbeam 2. In contrast to the embodiment of Fig. 1a and 1b, the flanges 14', 15' of the clamping slider 9 surround the bar region in a U-shape. In this manner, the flange 15' facing in the direction of the holder 6, for example, can be thicker than with the embodiment according to Fig. 1a and 1b, whereby the suspension clamping holder 1 can be adapted to the height h of the bore 5. Thus, upon exchanging the clamping slider 9, a simple adaptation to different bore heights is possible. With use of a thicker clamping slider 9, as shown in Fig. 2a and 2b, in the suspended state of the suspended clamping holder 1, only the part of the support 10 running parallel to the first region 3 rests on the crossbeam 2. The part of the support 10 running parallel to the bar region 4 is spaced from the bar region 4 by means of the flange 15' facing in the direction of the holder 6.

An advantageous aspect of the exemplary embodiments depicted in Fig.1a to Fig.2b is the clamping slider 9 which may be pushed on the on the bar region 4 (bottom flange) of the double-T-shaped crossbeam (carrier) 2 and which engages the latter utilizing a component 14. Another advantageous aspect of the exemplary embodiments depicted in Fig.1a to Fig.2b is the hook-like holding element 8 of the suspension clamping device 1 which holding element 8 encloses a rim of the bore 5 of the essentially T-shaped carrier 2.

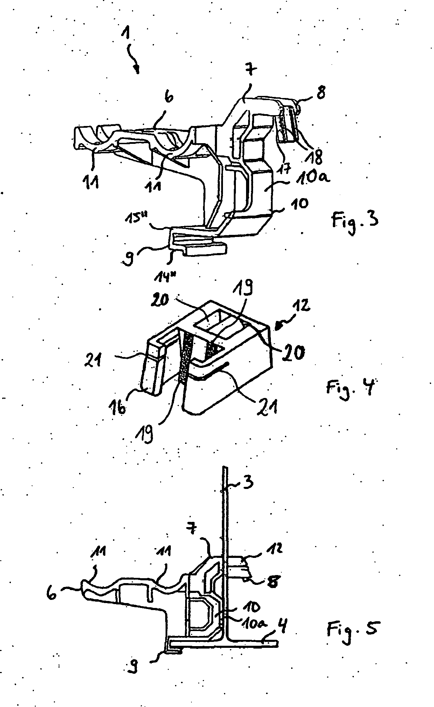

Fig. 3 shows in three-dimensional representation a further embodiment of the suspension clamping holder 1 of the present invention with an integrally formed clamping slider 9. The suspension claming holder 1, again, has a holder 6, which is provided with depressions 11, and on an end 7 of which, a holding element 8 as well as a support 10 are formed. The clamping slider 9 is formed as one piece on the support 10, such that the upper flange 15" of the clamping slider 9 simultaneously assumes the support function of the region of the support 10 running parallel to the bar region 4.

To this purpose, the support 10 is formed in the embodiment of Fig. 3 in the region running parallel to the first region 3 of the support structure 2 (not shown) angled in such a manner that the support 10 in the suspended state of the suspension clamping holder 1 merely rests via the region 10a of the support on the first region 3 of the crossbeam 2. By means of a specialized design of the support 10, therefore, the suspension clamping holder 1 can be adapted to the shape of the crossbeam 2.

Fig. 4 shows a three-dimensional representation of a closure element 12, which serves for additional securing of the suspended suspension clamping holder 1. The closure element 12 has a slot-shaped nose region 16, via which the closure element 12 is slided on the suspended holding element 8 and subsequently is locked by suitable means.

Fig. 5 shows in sectional view the suspension clamping holder 1 according to Fig. 3 in a suspended state, wherein the holding element 8 is locked by the suspended closure element 12.

The exemplary embodiment of the fastening system illustrated in Fig.3 to Fig.5 essentially comprises two parts, namely the suspension clamping holder 1 depicted in Fig.3 and the closure element 12 (or press-on element) depicted in Fig.4 which closure element 12 can be coupled with the suspension clamping holder 1 in the manner shown in Fig.5.

In the following, it will be described how the fastening system can be mounted.

The suspension clamping holder 1 with the holding element 8 is brought into an inclined position of approximately 15° and is suspended in the bore 5 of the double-T-shaped crossbeam 2. After that, the suspension clamping holder 1 with the clamping slider 9 provided thereon is slided over the horizontal part 4 of the double-T-shaped crossbeam 2 so that the region 10a of the support of the suspension clamping holder 1 abuts to the vertical surface 3 of the double-T-shaped crossbeam 2.

In order to avoid a tilting or dumping (that is to say an undesired removal) of the suspension clamping holder 1, which may be caused by applying a weight to the depressions or dents 11, the press-on element 12 is slided on the holding element 8 of the suspension clamping holder 1, which holding element 8 being brought into the inclined position of 15°. From the lowest position of the press-on element 12 at the holding element 8 inclined by 15° to the highest position of the press-on element 12, a thickness difference of the vertical part 3 of the double-T-shaped crossbeam 2 can be balanced or compensated.

In order to prevent that the press-on element 12 drops away or falls off the holding element 8 or is released by a vibration, rest surfaces 17 with rest knobs (not shown) are provided laterally of the holding element 8, which rest knobs lock or engage with rest slits 21 of the press-on element 12. The hooks 16 of the press-on element 12 clutch the holding element 8 of the suspension clamping holder 1.

As a further means of security, the press-on element 12 is provided with two roughened surfaces 19 abutting against a roughened surface 18 of the holding element 8 of the suspension clamping holder 1.

For the sake of security and in order to ensure a proper mounting of the press-on element 12, a cable binder is finally guided through two slits (not shown) in the end 7 of the suspension clamping holder 1 and through two slits 20 of the press-on element 12 and are tightened. Consequently, the vertical part 3 of the double-T-shaped crossbeam 2 is chocked or securely fastened between the suspension clamping holder 1 and the press-on element 12.

The end 7 and the holding element 8 has only half the width of the (broadest part of the) suspension clamping holder 1 (see Fig. 3) which allows to mount a further suspension clamping holder 1, turned by 180°. This may save space and may allow to use a holder of the same type of construction and to attach elements in front of and behind the first region 3 of the double-T-shaped crossbeam 2.

Of course, in one facilitation bore 5 of a crossbeam 2, also two suspension clamping holders 1 can be suspended on both sides, which is not shown, however.

The suspension clamping holder of the present invention ensures a secure locking of the suspended suspension clamping holder from shifting, slipping, twisting, or complete loosening. Therefore, the suspension clamping holder can be manipulated easily and has a minimal weight.

## Claims

1. Suspension clamping holder (1), mountable on a support structure (2) with T-shaped crossbeam profiles,
wherein the suspension clamping holder (1) comprises
- a holder (6) on an end (7) of which a holding element (8) is formed
- a clamping slider (9),
- a support (10) on which the clamping slider (9) is arranged, the support (10) is connected with the holder (6),
wherein the support structure (2) comprises
- a first region (3) which first region is provided with at least one holding member (5),
- and at least one bar region (4), wherein the first region (3) and the bar region (4) form an angle (α),
wherein the holding element (8) can be suspended for holding the suspension clamping holder (1) in the holding member (5) of the support structure (2),
wherein the clamping slider (9) is releasably connectable with the bar region (4) of the support structure (2), and is fixable in a clamping way onto the bar region (4) for locking the suspension clamping holder (1) suspended in the holding member (5),
and wherein the support (10) is adapted at least partially to the shape of the support structure (2) in the first region (3) and in the bar region (4) so that, in (the) a suspended state of the suspension clamping holder (1), the support (10) rests at least partially on the first region (3) and on the bar region (4) of the support structure (2).

2. Suspension clamping holder (1) of claim 1, wherein the holding element (8) has a hook-like configuration for suspension in the holding member (5), and wherein the holding member (5) is a bore arrangable in the first region (3) of the support structure (2).

3. Suspension clamping holder (1) of one of claims 1 or 2, wherein the clamping slider (9) has two movable flanges (14, 15) for opening and closing, which surround the edge of the bar region (13) in a clamping manner.

4. Suspension clamping holder (1) of one of claims 1 through 3, wherein the clamping slider (9) has flanges (14, 15) which surround the edge (13) of the bar region (4) in a U-shape.

5. Suspension clamping holder (1) of one of claims 1 through 4, wherein the clamping slider (9) is lockingly guided in the support (10).

6. Suspension clamping holder (1) of claim 5, wherein the clamping slider (9) is integrally formed on the support (10).

7. Suspension clamping holder (1) of one of claims 1 through 6, wherein the holder (6) is provided with at least one dent (11).

8. Suspension clamping holder (1) of one of claims 1 through 7, wherein a closure element (12) is provided for locking the holding element (8) suspended in the holding member (5).

9. Suspension clamping holder (1) of claim 8, wherein the closure element (12) can be slided on the holding element (8) suspended in the holding member (5).

10. Suspension clamping holder (1) of one of claims 1 through 9 for suspension in crossbeams provided with bores (5) for aircraft fuselage structures, seat rail supports, or support rail bearings.

11. Suspension clamping holder (1) of one of claims 1 through 10 for suspension in T-profiles provided with bores (5) made from aluminum or fiber-reinforced composite.

12. Suspension clamping holder (1) of one of claims 1 through 11,
wherein the holding element (8) has essentially half the width of a broadest part of the suspension clamping holder (1).

13. A fastening system, comprising
a suspension clamping holder (1) of one of claims 1 through 12, a closure element (12) adapted to fasten the suspension clamping holder (1), wherein the closure element (12) comprises
hooks adapted to clutch a holding element (8) provided at an end of the suspension clamping holder (1),
rest slits provided in the hooks and adapted to engage rest knobs provided on rest surfaces of the holding element (8).

14. The fastening system of claim 13,
comprising a roughened surface adapted to abut against a corresponding roughened surface of the holding element (8) of the suspension clamping holder (1).

15. The fastening system of one of claims 13 or 14,
comprising at least one slit or hole adapted to receive a cable binder.

## Patentansprüche

1. Einhängklemmhalter (1) befestigbar an einer Trägerstruktur (2) mit T-förmigem Querschnittsprofil, wobei der Einhängklemmhalter (1) aufweist
- einen Halter (6), an dessen einem Ende (7) ein Halteelement (8) angeformt ist
- einen Klemmschieber (9),
- eine Stütze (10), an welcher der Klemmschieber (9) angeordnet ist, die Stütze (10) ist mit dem Halter (6) verbunden,
wobei die Trägerstruktur (2) aufweist
einen ersten Bereich (3), der mit mindestens einem Halteelement (5) versehen ist,
und mindestens einem Stegbereich (4), wobei der erste Bereich (3) und der Stegbereich (4) einen Winkel (α) ausbilden,
wobei das Halteelement (8) zum Haltern des Einhängklemmhalters (1) in das Haltemittel (5) der Trägerstruktur (2) einhängbar ist,
wobei der Klemmschieber mit dem Stegbereich (4) der Trägerstruktur (2) lösbar in Verbindung steht und zum Arretieren des in das Haltemittel (5) eingehängten Einhängklemmhalters (1) fest an den Stegbereich (4) anklemmbar ist,
und wobei die Stütze (10) zumindest teilweise an die Form des ersten Bereichs (3) der Trägerstruktur (2) und den Stegbereich (4) der Trägerstruktur (2) angepasst ist, damit in einem (in dem) angehängten Zustand des Einhängklemmhalters (1), die Stütze zumindest teilweise auf dem ersten Bereich und auf dem Stegbereich der Trägerstruktur (2) aufliegt.

2. Einhängklemmhalter (1) nach Anspruch 1, wobei das Halteelement (8) zum Einhängen in das Haltemittel (5) hakenförmig ausgebildet ist, und wobei das Haltemittel (5) eine dem ersten Bereich (3) der Trägerstruktur (2) angeordnete Bohrung ist.

3. Einhängklemmhalter (1) nach einem der Ansprüche 1 oder 2, wobei der Klemmschieber (9) zum Öffnen und Schließen zwei bewegbare Backen (14, 15) aufweist, die die Kante (13) des Stegbereiches (4) klammerartig umgeben.

4. Einhängklemmhalter (1) nach einem der Ansprüche 1 bis 3, wobei der Klemmschieber (9) Backen (14, 15) aufweist, die die Kante (13) des Stegbereiches (4) U-förmig umgeben.

5. Einhängklemmhalter (1) nach einem der Ansprüche 1 bis 4, wobei der Klemmschieber (9) in der Stütze (10) arretierbar geführt ist.

6. Einhängklemmhalter (1) nach Anspruch 5, wobei der Klemmschieber (9) einstückig an die Stütze (10) angeformt ist.

7. Einhängklemmhalter (1) nach einem der Ansprüche 1 bis 6, wobei der Halter (6) mit zumindest einer Vertiefung (11) versehen ist.

8. Einhängklemmhalter (1) nach einem der Ansprüche 1 bis 7, wobei das Schließelement (12) zum Verriegeln des in das Haltemittel (5) eingehängten Halteelements (8) vorgesehen ist.

9. Einhängklemmhalter (1) nach Anspruch 8, wobei das Schließelement (12) auf das in das Haltemittel (5) eingehängte Halteelement (8) aufschiebbar ist.

10. Einhängklemmhalter (1) nach einem der Ansprüche 1 bis 9, zum Einhängen in mit Bohrungen (5) versehene Querträger für Flugzeugrumpfstrukturen, Sitzschienen- oder Stützschienenträger.

11. Einhängklemmhalter (1) nach einem der Ansprüche 1 bis 10, zum Einhängen in mit Bohrungen (5) versehene T-Profile aus Aluminium oder Faserverbundwerkstoff.

12. Einhängklemmhalter (1) nach einem der Ansprüche 1 bis 11, wobei das Halteelement (8) im Wesentlichen die Hälfte des Querschnitts des weitesten Abschnitts des Einhängklemmhalters (1) aufweist.

13. Befestigungssystem, aufweisend
einen Einhängklemmhalter (1) nach einem der Ansprüche 1 bis 12,
ein Schließelement (12) geeignet zum Befestigen des Einhängklemmhalters, wobei das Schließelement (12) aufweist
Haken geeignet zum Einspannen eines Halteelements (8), wobei das Halteelement an einem Ende des Einhängklemmhalters (1) vorgesehen ist,
Auflageschlitze angeordnet in den Haken und geeignet, zum Eingriff mit Auflagenoppen, die an der Auflagefläche des Halteelements (8) angeordnet sind.

14. Das Befestigungssystem nach Anspruch 13, aufweisend eine geraute Oberfläche, geeignet zum Angrenzen gegen eine korrespondierend geraute Oberfläche des Halteelements (8) des Einhängklemmhalters (1).

15. Das Befestigungssystem nach einem der Ansprüche 13 oder 14, aufweisend mindestens einen Schlitz oder eine Öffnung geeignet zur Aufnahme eines Kabelbinders.

## Revendications

1. Support de suspension serrant (1), pouvant être monté sur une structure d'appui (2) ayant des profils de traverse en forme de T,
le support de suspension serrant (1) comportant
- un support (6) sur une extrémité (7) duquel est formé un élément de support (8)
- un coulisseau serrant (9),
- un appui (10) sur lequel le coulisseau serrant (9) est agencé, l'appui (10) étant relié au support (6),
la structure d'appui (2) comportant
- une première zone (3), laquelle première zone comportant au moins un organe de support (5),
- et au moins une zone de barre (4), la première zone (3) et la zone de barre (4) formant un angle (α),
l'élément de support (8) pouvant être suspendu pour maintenir le support de suspension serrant (1) dans l'organe de support (5) de la structure d'appui (2),
le coulisseau serrant (9) pouvant être relié de manière amovible à la zone de barre (4) de la structure d'appui (2), et pouvant être fixé de manière serrante sur la zone de barre (4) afin de bloquer le support de suspension serrant (1) suspendu dans l'organe de support (5),
et l'appui (10) étant adapté au moins partiellement à la forme de la structure d'appui (2) dans la première zone (3) et dans la zone de barre (4) de telle sorte que, dans (le) un état suspendu du support de suspension serrant (1), l'appui (10) est au moins partiellement en appui sur la première zone (3) et sur la zone de barre (4) de la structure d'appui (2).

2. Support de suspension serrant (1) selon la revendication 1, dans lequel l'élément de support (8) a une configuration analogue à un crochet pour une suspension dans l'organe de support (5), et dans lequel l'organe de support (5) est un alésage pouvant être agencé dans la première zone (3) de la structure d'appui (2).

3. Support de suspension serrant (1) selon l'une des revendications 1 ou 2, dans lequel le coulisseau serrant (9) a deux semelles mobiles (14, 15) pour une ouverture et une fermeture, qui entourent le bord de la zone de barre (4) de manière serrante.

4. Support de suspension serrant (1) selon l'une des revendications 1 à 3, dans lequel le coulisseau serrant (9) a des semelles (14, 15) qui entourent le bord (13) de la zone de barre (4) selon une forme de U.

5. Support de suspension serrant (1) selon l'une des revendications 1 à 4, dans lequel le coulisseau serrant (9) est guidé de manière bloquante dans l'appui (10).

6. Support de suspension serrant (1) selon la revendication 5, dans lequel le coulisseau serrant (9) est formé d'un seul tenant sur l'appui (10).

7. Support de suspension serrant (1) selon l'une des revendications 1 à 6, dans lequel le support (6) comporte au moins un creux (11).

8. Support de suspension serrant (1) selon l'une des revendications 1 à 7, dans lequel un élément de fermeture (12) permet de bloquer l'élément de support (8) suspendu dans l'organe de support (5).

9. Support de suspension serrant (1) selon la revendication 8, dans lequel l'élément de fermeture (12) peut coulisser sur l'élément de support (8) suspendu dans l'organe de support (5).

10. Support de suspension serrant (1) selon l'une des revendications 1 à 9 pour une suspension dans des traverses comportant des alésages (5) pour des structures de fuselage d'avion, des supports de rail d'appui ou des paliers de rail de support.

11. Support de suspension serrant (1) selon l'une des revendications 1 à 10 pour une suspension dans des profilés en T munis d'alésages (5) fabriqués à partir d'aluminium ou de composite renforcé de fibre.

12. Support de suspension serrant (1) selon l'une des revendications 1 à 11, dans lequel l'élément de support (8) est pratiquement égal à la moitié de la largeur d'une partie la plus large du support de suspension serrant (1).

13. Système de fixation, comportant
un support de suspension serrant (1) selon l'une des revendications 1 à 12,
un élément de fermeture (12) adapté pour fixer le support de suspension serrant (1), l'élément de fermeture (12) comportant
des crochets adaptés pour accoupler un élément de support (8) agencé à une extrémité du support de suspension serrant (1),
des fentes d'appui agencées dans les crochets et adaptées pour venir en prise avec des tenons d'appui agencés sur des surfaces d'appui de l'élément de support (8).

14. Système de fixation selon la revendication 13, comportant une surface rugueuse adaptée pour venir en butée contre une surface rugueuse correspondante de l'élément de support (8) du support de suspension serrant (1).

15. Système de fixation selon l'une des revendications 13 ou 14, comportant au moins une fente ou un trou adapté pour recevoir un serre-câble.
